# FASCICULE DE BREVET EUROPEEN

(11) **EP 3 194 251 B1**
(45) Date de publication et mention de la délivrance du brevet: **03.10.2018**
(21) Numéro de dépôt: 15759899.6
(22) Date de dépôt: 12.08.2015
(51) Int. Cl.: B62D 21/15

(54) **CADRE AVANT DE VEHICULE AUTOMOBILE POUR GROUPE VENTILATEUR-RADIATEUR**
FRONTRAHMEN EINES KRAFTFAHRZEUGS FÜR EINE LÜFTER-KÜHLER-EINHEIT
FRONT FRAME OF A MOTOR VEHICLE FOR A FAN-RADIATOR UNIT

(30) Priorité: 01.09.2014 FR 1458149
(43) Date de publication de la demande: 26.07.2017
(73) Titulaire: PSA Automobiles SA, 78300 Poissy (FR)
(72) Inventeur: JEANNEAU, Clément, F-92100 Boulogne Billancourt (FR); PICQUET, Christophe, F-78000 Versailles (FR); LEGRAND, Fabrice, F-78180 Montigny Le Bretonneux (FR)
(86) Numéro de dépôt international: PCT/FR2015/052201
(87) Numéro de publication internationale: WO 2016/034789

(56) Documents cités:
- EP-A1- 2 067 690
- EP-A1- 2 708 446
- WO-A1-2014/077227
- DE-A1-102009 021 361
- DE-A1-102009 058 287
- DE-A1-102010 049 353
- DE-A1-102012 019 013
- US-A1- 2008 157 563
- US-A1- 2008 174 150
- US-A1- 2011 233 947
- US-A1- 2012 248 820

## Description

L'invention a trait au domaine des véhicules automobiles. Plus particulièrement, l'invention a trait à la structure avant de véhicule automobile.

Le document de brevet US 2014/0152051 A1 divulgue une structure de pare-chocs avant de véhicule automobile comprenant deux profilés structurels longitudinaux s'étendant vers l'avant du véhicule, une poutre transversale située à distance sous les profilés longitudinaux et soutenue par des bras verticaux fixés aux extrémités avant des profilés structurels longitudinaux. La poutre transversale est également fixée à la structure du véhicule par deux bras longitudinaux inférieurs fixés à l'arrière à un berceau moteur. Cette construction a pour objectif de proposer des moyens d'absorption de choc frontal qui soient particulièrement compacts selon la direction longitudinale du véhicule. La liaison entre la poutre transversale et les bras longitudinaux inférieurs est par ailleurs travaillée de manière à assurer une absorption d'énergie en cas de choc. La structure de cet enseignement est cependant pénalisante en ce qu'elle requiert la présence de bras inférieurs reliés au berceau moteur. Or une telle construction implique certaines contraintes géométriques ainsi qu'un poids additionnel non négligeable.

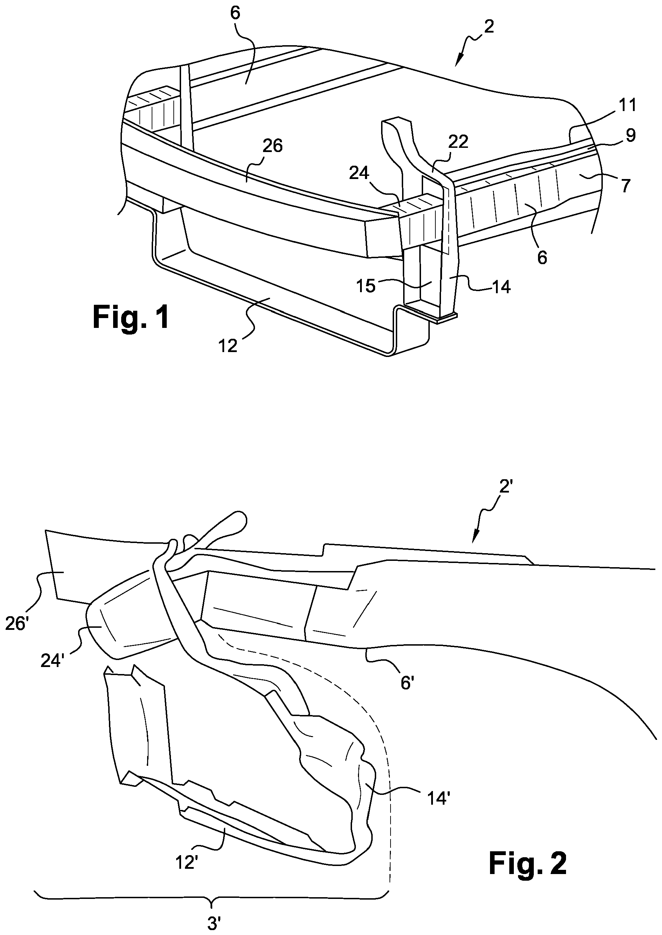

La figure 1 est une vue d'une structure avant 2 connue de l'état de l'art. Elle est en l'occurrence celle d'un véhicule de taille moyenne. Elle comprend deux profilés structurels longitudinaux 6 qui s'étendent parallèlement à l'avant du véhicule, ces profilés étant communément appelé brancards. La structure 2 comprend également une traverse inférieure 12 qui est située à distance sous les profilés structurels 6 et qui est soutenue par deux bras latéraux 14 s'étendant vers le bas depuis l'extrémité avant de chacun des deux profilés structurels 6 respectivement. Chacun des profilés structurels longitudinaux 6 comprend également une platine 22 à son extrémité et un profilé déformable 24 fixé à la platine 22 et s'étendant vers l'avant dans le prolongement du profilé structurel 6. Une poutre transversale 26 complète la structure 2 en joignant les deux extrémités avant des profilés déformables 24. Cet enseignement est intéressant en ce que les bras latéraux 14 et la traverse inférieure 12 forment un cadre apte à supporter et protéger un groupe ventilateur-radiateur. L'application du concept de la structure en question est applicable aux véhicules qui disposent de profilés structurels longitudinaux avec un moment et un module d'inertie adaptés.

L'invention a pour objectif de proposer une solution de structure de pare-chocs avant de véhicule automobile qui pallie au moins l'un des inconvénients de l'état de la technique susmentionné. Plus particulièrement, l'invention a pour objectif de proposer une structure avant qui puisse limiter les dégâts, notamment au niveau du groupe ventilateur-radiateur, en cas de chocs dit « réparabilité » à moins de 20 km/h, tout en garantissant une absorption et une déformation adéquate en cas de choc à plus grande vitesse.

L'invention a pour objet une structure de véhicule automobile comprenant : deux profilés structurels longitudinaux s'étendant parallèlement à l'avant du véhicule et comprenant, chacun, une extrémité avant et une face latérale intérieure en vis-à-vis de l'autre desdits profilés ; une traverse inférieure située à distance sous les profilés structurels ; et deux bras latéraux s'étendant chacun vers le bas depuis l'extrémité avant d'un des deux profilés structurels, respectivement, lesdits bras supportant la traverse inférieure, chacun des bras s'étendant contre la face latérale intérieure du profilé structurel correspondant.

Une telle structure est divulguée par le document US20120248820A1 et fait l'objet du préambule de la revendication 1 de la présente demande.

Selon un mode avantageux de l'invention, chacun des bras latéraux est un profilé avec une âme s'étendant longitudinalement et verticalement, en contact avec la face intérieure du profilé structurel correspondant.

Selon l'invention, la structure comprend un absorbeur inférieur fixé sous la traverse inférieure et s'étendant en avant de ladite traverse en vue d'absorber l'énergie de chocs piéton, ledit absorbeur étant en matériau plastique et la traverse inférieure pouvant être métallique. Selon un mode avantageux de l'invention, chacun des bras latéraux est un profilé en U avec une âme et deux semelles, lesdites semelles s'étendant transversalement. Selon un mode avantageux de l'invention, la largeur de l'âme varie le long de chacun des bras, ladite largeur étant maximale à hauteur du profilé structurel correspondant.

Selon un mode avantageux de l'invention, chacun des bras latéraux est fixé au profilé structurel correspondant au niveau de son contact avec la face intérieure dudit profilé.

Avantageusement, la fixation de chacun des bras latéraux au profilé structurel correspondant est réalisée par points de soudure électrique.

Selon un mode avantageux de l'invention, chacun des bras latéraux s'étend également vers le haut depuis le profilé structurel correspondant.

Selon un mode avantageux de l'invention, chacun des bras latéraux est un embouti de tôle, préférentiellement en acier.

Selon un mode avantageux de l'invention, chacun des profilés structurels comprend à son extrémité avant une platine de fixation d'un profilé déformable s'étendant dans le prolongement avant dudit profilé structurel, le bras latéral correspondant s'étendant directement le long de la face arrière de la dite platine, ledit bras étant préférentiellement fixé à ladite platine.

Selon un mode avantageux de l'invention, la structure comprend un profilé déformable s'étendant dans le prolongement de chacun des profilés structurels ainsi qu'une poutre transversale supérieure joignant les extrémités avant des profilés déformables.

Avantageusement, les profilés déformables sont déformables par bottelage dans la direction longitudinale

Selon un mode avantageux de l'invention, la traverse inférieure et les deux bras latéraux forment un cadre recevant et supportant un groupe ventilateur-radiateur.

Selon un mode avantageux de l'invention, chacun des profilés structurels longitudinaux comprend un profilé en U assemblé à un feuillard refermant la section en U. Préférentiellement, le profilé en U comprend des ailes de part et d'autre de l'ouverture du U, formant avec le feuillard des feuillures de jonction.

Selon un mode avantageux de l'invention, la largeur du U correspond à moins de 70%, préférentiellement moins de 50%, de la largeur du feuillard.

L'invention a également trait à un véhicule automobile comprenant une structure conforme à l'invention.

Les mesures de l'invention sont intéressantes en ce que la structure avant du véhicule est apte à loger un groupe ventilateur-radiateur tout en le protégeant en cas de certains chocs frontaux, notamment de chocs dit « réparabilité ». En outre, sa réalisation ne nécessite pas de moyens importants et est économique. En effet, la structure du véhicule comprend une traverse inférieure soutenue par des bras latéraux et apte à recevoir un groupe ventilateur-radiateur. Les bras latéraux qui sont fixés aux profilés structurels et qui s'étendent longitudinalement et vers le bas contre la face intérieure respective de chacun des profilés structurels, sont résistants en cas de choc frontal à moins de 20km/h. Cette résistance protège favorablement le groupe ventilateur-radiateur de tout endommagement. La capacité d'absorption d'énergie des bras latéraux soulage, en outre, favorablement les profilés structurels sur lesquels ils sont fixés en cas de choc frontal à plus grande vitesse. Les mesures de l'invention permettent d'éviter un déversement des profilés structurels en cas de choc avant à plus de 20 km/h.

D'autres caractéristiques et avantages de la présente invention seront mieux compris à l'aide de la description et des dessins parmi lesquels :
- La figure 1 est une vue en perspective de trois quarts avant d'une structure de pare-chocs de l'état de l'art d'un véhicule de taille moyenne ;
- La figure 2 est une vue de côté d'une structure de pare-chocs d'un véhicule de petite taille après un choc frontal à une vitesse comprise entre 40km/h et 50km/h ;
- La figure 3 est une vue en perspective de trois quarts avant d'un véhicule automobile de petite taille comprenant une structure de pare-chocs conforme à l'invention et dans un mode avantageux de l'invention ;
- La figure 4 est une vue de côté de la structure de pare-chocs de la figure 3 en face d'un obstacle frontal illustré schématiquement ;
- La figure 5 est une vue en perspective d'un tiers avant d'un côté de la structure de pare-chocs des figure 3 et 4 ;

La figure 1 a été présentée en relation avec la description de l'état de la technique.

En particulier, la figure 1 est une vue en perspective de trois quarts avant d'une structure 2 de pare-chocs de l'état de l'art d'un véhicule de taille moyenne. Chacun des profilés structurels longitudinaux 6 est réalisé par un assemblage d'un profilé 7 en U soudé le long de feuillures 9 à un feuillard 11. Dans un mode alternatif de réalisation, le profilé 7 en U peut être soudé à un autre profilé en U. La structure comprend des bras latéraux 14 formant un profilé en U. On peut en particulier noter que l'âme 15 du profilé en U de chacun des bras latéraux 14, est dans un plan transversal qui s'étend contre la platine de fixation 22 de chacun des profilés déformables 14. Le cadre, réalisé par la traverse inférieure 12 et les bras latéraux 14, transmet via l'âme 15 des profilés en U de chacun des bras, un moment de flexion sensiblement important sur les platines 22 à l'extrémité avant des profilés structurels longitudinaux 6.

La figure 2 est une vue d'une structure avant 2' après un choc frontal à une vitesse comprise entre 40 km/h et 50 km/h. La structure 2' est identique à celle de la structure 2 de la figure 1, à cette différence près que les brancards ou profilés structurels longitudinaux sont moins massifs, comme notamment sur un véhicule de plus petite taille. Lors d'un tel choc frontal, il est intéressant de voir que la partie 3' de la structure 2' en avant des profilés structurels longitudinaux 6' a absorbé de l'énergie du choc par déformation. Cette partie 3' comprend la traverse inférieure 12', la poutre transversale 26', les profilés déformables 24' et les bras latéraux 14'. On peut cependant observer que les profilés longitudinaux 6' se sont également irrémédiablement déformés.

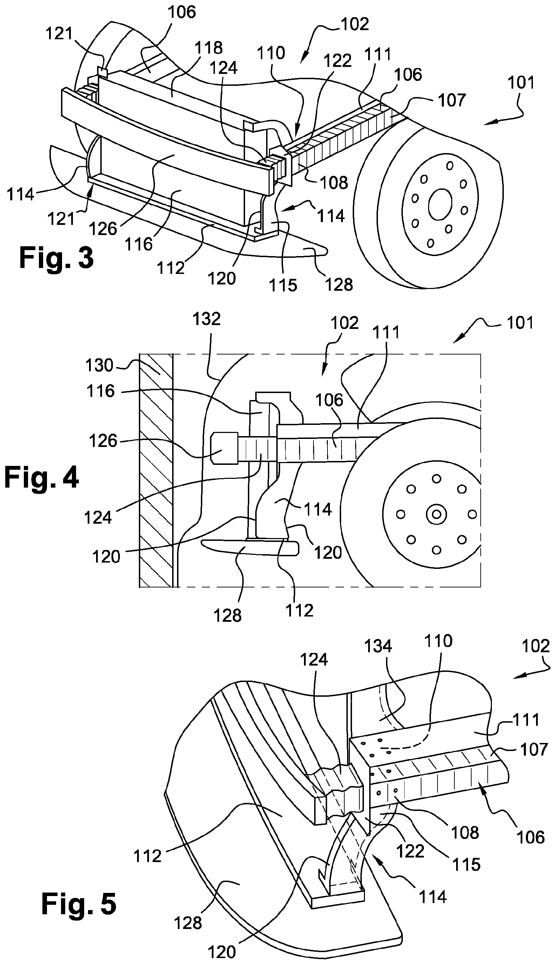

La figure 3 est une vue en perspective de trois quarts avant d'un véhicule 101 avec une structure 102 de pare-chocs avant conforme à l'invention et dans un mode avantageux de réalisation. Le véhicule 101 est en l'occurrence un véhicule de petite taille. La structure 102 comprend deux profilés structurels longitudinaux 106 s'étendant parallèlement à l'avant du véhicule et comprenant, chacun, une extrémité avant 108 et une face latérale intérieure 110 en vis-à-vis de l'autre des profilés 106. La structure 102 comprend également une traverse inférieure 112 située à distance sous les profilés structurels 106, et deux bras latéraux 114 qui s'étendent vers le bas depuis l'extrémité avant 108 de chacun des deux profilés structurels 106, respectivement. La traverse inférieure 112 et les deux bras 114 forment un cadre pouvant recevoir un groupe ventilateur-radiateur 116. Essentiellement chacun des bras latéraux 114 s'étend contre la face latérale intérieure 110 du profilé structurel 106 correspondant et s'étend vers le bas pour supporter la traverse inférieure 112. Les bras latéraux 114 peuvent être des profilés, favorablement en U, avec une âme 115 et des semelles 120 de part et d'autre de l'âme, l'âme 115 étant en contact avec la face intérieure 110 du profilé structurel 106; chacun des bras latéraux 114 peut être fixé sur le profilé latéral 106 correspondant au niveau de ce contact 110. Les semelles 120 des bras latéraux 114 s'étendent transversalement de part et d'autre de l'âme 115. Les faces latérales 110 peuvent s'étendre dans un plan essentiellement longitudinal ; l'âme 115 des profilés en U peut également s'étendre dans un plan essentiellement longitudinal ce qui est favorable à la résistance des bras latéraux 114 en cas de choc avant.

Par ailleurs, chacun des bras 114 peut s'étendre vers le haut depuis le profilé structurel 106 correspondant. Cette extension vers le haut peut être réalisée pour soutenir une traverse de façade 118. Finalement, les bras latéraux 114 peuvent comprendre des pattes 121 pour réaliser la fixation de la traverse inférieure 112 ainsi que celle de la traverse de façade 118. Dans ce mode avantageux de réalisation, chacun des profilés structurels 106 comprend à son extrémité avant une platine 122 de fixation, la structure 102 pouvant comprendre deux profilés déformables 124 qui s'étendent chacun dans le prolongement avant de chacun des profilés structurels 106 et fixé sur chacune des platines 122. La structure 102 peut également comprendre une poutre transversale supérieure 126 joignant les extrémités avant des profilés déformables 124. Cette mesure est intéressante en ce qu'elle permet d'absorber de l'énergie du choc frontal, les profilés déformables 124 se déformant par bottelage dans la direction longitudinale. La structure 102 de pare-chocs peut, en outre, comprendre un absorbeur inférieur 128 fixé sous la traverse inférieure 112 et s'étendant en avant de la traverse inférieure.

On peut noter que chacun des profilés structurels longitudinaux 106 peut être constitué d'un profilé 107 en U muni d'ailes de part et d'autre de l'ouverture du U, et assemblé via lesdites ailes à un feuillard 111. Chacun des profilés 107 en U peut être situé à l'extérieur du profilé structurel 106 ; chacun des feuillards 111 est favorablement situé à l'intérieur des profilés structurels 106 de manière à former les faces latérales intérieures 110 recevant les bras latéraux 114. Le U du profilé 107 peut être d'une largeur correspondant à moins de 80% de la largeur du feuillard 111, préférentiellement moins de 50%. Dans un mode alternatif de réalisation (non représenté), les profilés en U des profilés structurels longitudinaux peuvent avoir une ouverture vers le haut, les feuillards les refermant par le dessus. Dans ce mode de réalisation alternatif, la jambe intérieure de chacun des profilés en U peut former la face latérale intérieure recevant chacun des bras latéraux.

La figure 4 est une vue de côté d'un véhicule 101 avec la structure 102 de pare-chocs en face d'un obstacle frontal 130 illustré schématiquement. L'obstacle 130 peut correspondre à un piéton, il peut également correspondre à un obstacle plus massif rigide ou déformable. Le véhicule comprend généralement un bouclier avant 132 en avant de la structure 102 de pare-chocs. La réalisation de la structure 102 avec un absorbeur inférieur 128 s'étendant en avant de la traverse inférieure 112 est intéressante en particulier pour l'absorption d'énergie en cas de chocs contre un piéton. Lors d'un tel choc l'absorbeur inférieur 112 se déforme en absorbant sensiblement peu d'énergie ce qui génère un amortissement. L'absorbeur 128 est en matériau plastique ; la traverse inférieure 112 peut être métallique ; chacun des bras latéraux 114 peut être un embouti de tôle, préférablement en acier. Lors d'un tel choc la traverse inférieure 112 et les bras latéraux 114 la supportant sont suffisamment rigide pour ne pas se déformer. Lors de tests « réparabilité » qui sont des tests de choc frontal de véhicules automobiles à moins de 20km/h, l'énergie de déformation est plus importante, l'absorbeur 128 se déforme et peut éventuellement se déplacer en arrière sous la traverse inférieure 112, le reste de l'énergie du choc pouvant être absorbé par la déformation de la poutre transversale supérieure 126 et des profilés longitudinaux déformables 124, la traverse inférieure 112 et les bras latéraux 114 formant toujours un appui arrière rigide pour l'absorbeur inférieur 128. Cette mesure est intéressante en particulier dans le cas où un groupe ventilateur-radiateur 116 est situé dans le cadre formé par la traverse inférieure 112 ainsi que les bras latéraux 114, la rigidité de ce cadre pouvant en effet protéger le groupe 116 et/ou les moyens de fixation du groupe au cadre. Dans le cas de choc frontal du véhicule à une plus grande vitesse entre 40km/h et 50km/h la quantité d'énergie à absorber est beaucoup plus importante, la traverse inférieure 112 ainsi que les bras latéraux 114 sont alors aptes à se déformer tout en absorbant une quantité d'énergie sensiblement importante. Cette mesure est intéressante en ce que cette déformation réduit la quantité d'énergie restant à transmettre aux profilés structurels 106. On peut observer sur cette image que les bras latéraux 114 s'étendent longitudinalement vers l'avant du véhicule en même temps que vers le bas, ce qui les rend apte à se déformer en partie en même temps que les profilés déformables 124 lors d'un choc frontal à plus grande vitesse.

La figure 5 est une vue en perspective d'un côté de la structure 102 de pare-chocs conforme à l'invention. On peut voir en 114 des deux bras latéraux, en l'occurrence le bras gauche, s'étendant contre la face latérale intérieure 110 du profilé structurel 106 correspondant et s'étendant vers le bas pour supporter la traverse inférieure 112 qui elle-même soutient l'absorbeur piéton 128. Le bras latéral 114 est favorablement fixé par des points de soudure électrique 134 dans sa position contre la face latérale 110 du profilé structurel 106 correspondant. On peut observer, en l'occurrence, le feuillard 111 et le profilé 107 en U formant le profilé structurel longitudinal 106. La face latérale 110 en question qui est située à l'extrémité avant 108 du profilé structurel 106 est plaquée en l'occurrence sur le feuillard 111 du profilé ; la face latérale 110 peut se trouver juste en arrière de la platine 122 de fixation du profilé déformable 124. Dans ce mode de réalisation, le bras 114 peut s'étendre directement le long de la face arrière de cette platine 122, il peut également être soudé à cette face arrière. La description faite en particulier pour le côté gauche de la structure 102 est identique pour le côté droit. Lors d'un choc frontal, la force générée sur la traverse inférieure 112 crée un moment de flexion sur les profilés structurels longitudinaux 106 au niveau de leur fixation aux bras latéraux 114. Ceux-ci sont des profilés dont la largeur de l'âme 115 peut varier jusqu'à être maximale à hauteur du profilé structurel 106 correspondant. Cette mesure est intéressante en ce qu'elle augmente la capacité des bras latéraux 114 ainsi que des profilés structurels 106 à résister au moment de flexion au niveau des faces latérales 110 en cas de choc frontal.

## Revendications

1. Structure (102) de véhicule automobile (101) comprenant :
- deux profilés structurels longitudinaux (106) s'étendant parallèlement à l'avant du véhicule et comprenant, chacun, une extrémité avant (108) et une face latérale intérieure (110) en vis-à-vis de l'autre desdits deux profilés (106) ; et
- deux bras latéraux (114) s'étendant, chacun, vers le bas depuis l'extrémité avant (108) d'un des deux profilés structurels (106), respectivement ; et
- une traverse inférieure (112) située à distance sous les profilés structurels (106) et supportée exclusivement par les deux bras latéraux chacun des bras latéraux (114) s'étendant contre la face latérale intérieure (110) du profilé structurel (106) correspondant,
**caractérisée en ce qu'**elle comprend, en outre, un absorbeur inférieur (128) fixé sous la traverse inférieure (112) et s'étendant en avant de ladite traverse en vue d'absorber l'énergie de chocs piéton, ledit absorbeur inférieur (128) étant formé en matériau plastique.

2. Structure (102) selon la revendication 1, **caractérisée en ce que** chacun des bras latéraux (114) est un profilé avec une âme (115) s'étendant longitudinalement et verticalement, en contact avec la face intérieure (110) du profilé structurel (106) correspondant.

3. Structure (102) selon la revendication 2, **caractérisée en ce que** chacun des bras latéraux (114) est un profilé en U avec une âme (115) et deux semelles (120), lesdites semelles s'étendant transversalement.

4. Structure (102) selon l'une des revendications 2 et 3, **caractérisée en ce que** la largeur de l'âme (115) varie le long de chacun des bras (114), ladite largeur étant maximale à hauteur du profilé structurel (106) correspondant.

5. Structure (102) selon l'une des revendications 1 à 4, **caractérisé en ce que** chacun des bras latéraux (114) est fixé au profilé structurel (106) correspondant au niveau de son contact avec la face intérieure (110) dudit profilé (106)

6. Structure (102) selon l'une des revendications 1 à 5, **caractérisée en ce que** chacun des bras latéraux (114) s'étend également vers le haut depuis le profilé structurel (106) correspondant.

7. Structure (102) selon l'une des revendications 1 à 6, **caractérisée en ce que** chacun des bras latéraux (114) est un embouti de tôle, préférentiellement en acier.

8. Structure (102) selon l'une des revendications 1 à 7, **caractérisée en ce que** chacun des profilés structurels (106) comprend à son extrémité avant une platine (122) de fixation d'un profilé déformable (124) s'étendant dans le prolongement avant dudit profilé structurel (106), le bras latéral correspondant (114) s'étendant directement le long de la face arrière de la dite platine (122), ledit bras (114) étant préférentiellement fixé à ladite platine (122).

9. Structure (102) selon l'une des revendications 1 à 8, **caractérisée en ce que** la traverse inférieure (112) et les deux bras latéraux (114) forment un cadre recevant et supportant un groupe ventilateur-radiateur (116).

## Patentansprüche

1. Struktur (102) eines Kraftahrzeugs (101), umfassend:
- zwei longitudinale strukturelle Profile (106), die sich parallel an der Vorderseite des Fahrzeugs erstrecken und wobei jedes ein Vorderende (108) und eine innere Seitenfläche (110) gegenüber dem anderen der zwei Profile (106) umfasst; und
- zwei seitliche Arme (114), von denen sich jeder vom Vorderende (108) eines der zwei strukturellen Profile (106) ausgehend jeweils nach unten erstreckt; und
- einen unteren Querträger (112), der unter den strukturellen Profilen (106) beabstandet gelegen ist und ausschließlich durch die zwei seitlichen Arme getragen wird, wobei jeder der zwei seitlichen Arme (114) sich gegen die innere Seitenfläche (110) des entsprechenden strukturellen Profils (106) erstreckt,
**dadurch gekennzeichnet, dass** sie weiter einen unteren Absorber (128) umfasst, der unter dem unteren Querträger (112) befestigt ist und sich vor dem Querträger erstreckt, um Energie von Fußgängeraufprallen zu absorbieren, wobei der untere Absorber (128) aus Plastikmaterial geformt ist.

2. Struktur (102) nach Anspruch 1, **dadurch gekennzeichnet, dass** jeder der seitlichen Arme (114) ein Profil mit einem Kernstück (115) ist, das sich in Längsrichtung und vertikal erstreckt und die innere Fläche (110) des entsprechenden strukturellen Profils (106) berührt.

3. Struktur (102) nach Anspruch 2, **dadurch gekennzeichnet, dass** jeder der seitlichen Arme (114) ein Profil in U-Form mit einem Kernstück (115) und zwei Unterlagen (120) ist, wobei die Unterlagen sich in Querrichtung erstrecken.

4. Struktur (102) nach einem der Ansprüche 2 und 3, **dadurch gekennzeichnet, dass** die Länge des Kernstücks (115) entlang jeder der Arme (114) variiert, wobei die Länge in Höhe des entsprechenden strukturellen Profils (106) maximal ist.

5. Struktur (102) nach einem der Ansprüche 1 bis 4, **dadurch gekennzeichnet, dass** jeder der seitlichen Arme (114) an das strukturelle Profil (106), das seiner Berührungshöhe mit der inneren Fläche (110) des Profils (106) entspricht, befestigt ist.

6. Struktur (102) nach einem der Ansprüche 1 bis 5, **dadurch gekennzeichnet, dass** jeder der seitlichen Arme (114) sich vom entsprechenden strukturellen Profil (106) ausgehend ebenfalls nach oben erstreckt.

7. Struktur (102) nach einem der Ansprüche 1 bis 6, **dadurch gekennzeichnet, dass** jeder der seitlichen Arme (114) ein tiefgezogenes Metallblech, vorzugsweise aus Stahl, ist.

8. Struktur (102) nach einem der Ansprüche 1 bis 7, **dadurch gekennzeichnet, dass** jedes der strukturellen Profile (106) an seinem Vorderende eine Platine (122) zur Befestigung eines verformbaren Profils (124) umfasst, das sich in der Verlängerung des strukturellen Profils (106) erstreckt, wobei der entsprechende seitliche Arm (114) sich unmittelbar entlang der Hinterseite der Platine (122) erstreckt, wobei der Arm (114) vorzugsweise an die Platine (122) befestigt ist.

9. Struktur (102) nach einem der Ansprüche 1 bis 8, **dadurch gekennzeichnet, dass** der untere Querträger (112) und die zwei seitlichen Arme (114) einen Rahmen bilden, der den Ventilator-Kühler (116) aufnimmt und stützt.

## Claims

1. Motor vehicle (101) structure (102) comprising:
- two longitudinal structural profiles (106) extending parallel to the front of the vehicle and each comprising a front end (108) and an internal side face (110) opposite the other of said two profiles (106); and
- two side arms (114) each extending towards the bottom from the front end (108) of one of the two structural profiles (106), respectively; and
- a lower cross member (112) situated at distance under the structural profiles (106) and supported exclusively by the two side arms, each one of the side arms (114) extending against the internal side face (110) of the corresponding structural profile (106),
**characterised in that** it further comprises a lower absorber (128) attached under the lower cross member (112) and extending in front of said cross member in view of absorbing energy from pedestrian impacts, said lower absorber (128) being formed of plastic material.

2. Structure (102) according to claim 1, **characterised in that** each one of the side arms (114) is a profile with a core (115) extending longitudinally and vertically, in contact with the inner face (110) of the corresponding structural profile (106).

3. Structure (102) according to claim 2, **characterised in that** each one of the side arms (114) is a U-shaped profile with a core (115) and two base plates (120), said base plates extending transversally.

4. Structure (102) according to one of claims 2 and 3, **characterised in that** the width of the core (115) varies along each one of the arms (114), said width being maximum to the height of the corresponding structural profile (106).

5. Structure (102) according to one of claims 1 to 4, **characterised in that** each one of the side arms (114) is attached to the corresponding structural profile (106) at the level of the contact thereof with the inner face (110) of said profile (106).

6. Structure (102) according to one of claims 1 to 5, **characterised in that** each one of the side arms (114) also extends towards the top from the corresponding structural profile (106).

7. Structure (102) according to one of claims 1 to 6, **characterised in that** each one of the side arms (114) is a drawn metal sheet, preferably made of steel.

8. Structure (102) according to one of claims 1 to 7, **characterised in that** each one of the structural profiles (106) comprises, at the front end thereof, a deck (122) for attaching a deformable profile (124) extending in the front extension of said structural profile (106), the corresponding side arm (114) extending directly along the rear face of said deck (122), said arm (114) preferably being attached to said deck (122).

9. Structure (102) according to one of claims 1 to 8, **characterised in that** the lower cross member (112) and the two side arms (114) form a frame receiving and supporting a radiator fan unit (116).
